# EUROPEAN PATENT SPECIFICATION

(11) **EP 3 216 701 B1**
(45) Date of publication and mention of the grant of the patent: **19.12.2018**
(21) Application number: 16159873.5
(22) Date of filing: 11.03.2016
(51) Int. Cl.: B64D 41/00

(54) **LATCH MECHANISM**
VERRIEGELUNGSMECHANISMUS
MÉCANISME DE LOQUET

(43) Date of publication of application: 13.09.2017
(73) Proprietor: Hamilton Sundstrand Corporation, Charlotte, NC 28217 (US)
(72) Inventor: TROTZKO, Stefan, 51-354 Wroclaw (PL); SAROSIEK, Janusz, 51-662 Wroclaw (PL)
(74) Representative: Dehns

(56) References cited:
- EP-A1- 2 458 226
- WO-A1-2009/109970
- US-A- 5 366 313
- US-A1- 2013 078 026

## Description

### TECHNICAL FIELD

The present disclosure relates to locking/unlocking latch mechanisms for deployable components. The mechanism is particularly suitable as an unlocking mechanism for a ram air turbine (RAT) actuator but could also find application in other deployable or movable systems such as other actuators, valves, pumps and the like.

### BACKGROUND

Many systems and mechanisms are known in which a component is movable between a closed or stowed position and an open or deployed position, and wherein a component should be locked in the desired position and unlocked to permit movement between the positions. Particular examples are valves or actuators, such as RAT actuators as described in more detail below.

Locking mechanisms are known to secure the actuator, valve etc. in a particular position, and unlocking mechanisms are known to release the locking mechanism and permit movement of the actuator/valve components to a different position, whereupon the actuator components can then also be locked in the second position by means of a locking mechanism. A locking mechanism for a RAT actuator is disclosed, for example, in US 2013/0327207.

Locking mechanisms are also taught in US 2013/0078026 and EP 2458226.

Ram air turbines are used in aircraft to provide electric and/or hydraulic power to components of the aircraft, for example in the event of failure of other electrical or hydraulic power generating equipment on board the aircraft. In normal operation of the aircraft, the RAT is housed within the aircraft, but when needed it is extended into the airflow around the aircraft such that it may turn, due to the airflow, and generates electrical and/or hydraulic power. The RAT is typically pivoted into position by means of an actuator, for example a hydraulic actuator. The actuator typically includes a lock bolt which extends to deploy the RAT. The actuator has a lock mechanism which prevents inadvertent movement of the lock bolt and, thus, inadvertent deployment of the RAT. The main locking mechanism typically comprises a spring loaded lock bolt which must be moved in an axial direction to unlock the actuator. Such an actuator is disclosed, for example, in US 2015/0232195. RAT actuators are also disclosed in US 8,640,563, US 9,193,472 and US 2015/0096437.

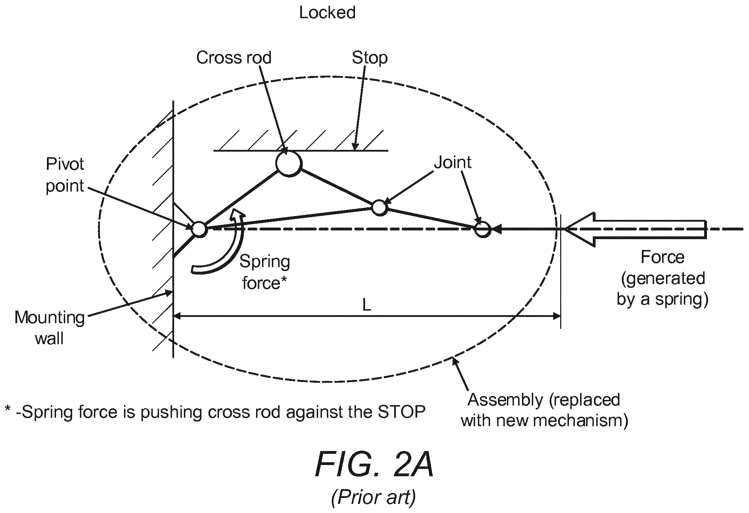

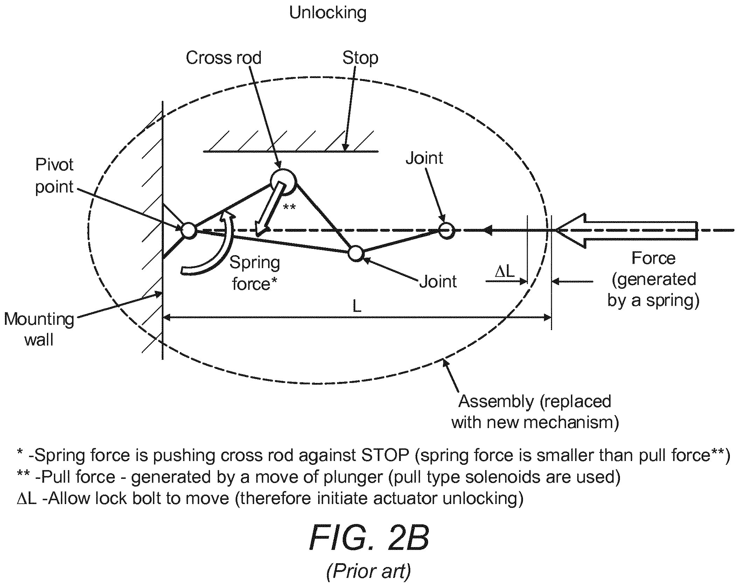

An unlocking mechanism is provided to permit the axial bolt movement. A conventional unlocking mechanism is shown, for example, in Figs. 2A and 2B, comprising a toggle or linkage assembly, one end of which is rotatably coupled to one end of the lock bolt and the other end of which is axially fixed and rotatably coupled to, for example, a mounting wall. A solenoid moves the toggle assembly between a locked (FIG. 2A) and an unlocked (FIG 2B) position. In the locked position, the linkage assembly pushes against the lock bolt against the force of the lock bolt spring to prevent axial movement of the lock bolt. When it is required to deploy the RAT, the lock bolt needs to be released for axial movement of the actuator. As seen in Fig. 2B, a pull force, greater than the spring force, is exerted on the linkage assembly by means of a solenoid, which moves the linkage assembly out of engagement with the lock bolt. This allows the lock bolt to move axially to initiate actuator unlocking to permit deployment. The solenoid must have sufficient force to displace the lock bolt against the force of the lock bolt spring and the linkages and joints require sufficient axial and radial space and may also be prone to wear or damage.

The size and weight of components is of particular concern in aircraft where there is a desire to use lighter and smaller components, whilst maintaining safety and reliability.

The toggle assembly is also very sensitive; shimming is required to ensure the toggle assembly operates reliably.

There is a desire, therefore, to provide a locking/unlocking mechanism for such systems to prevent/permit axial movement of a component such as a lock bolt, without the need for such large solenoids and a series of links, and with a simpler and less sensitive arrangement.

### SUMMARY

The present disclosure provides a RAT actuator assembly as claimed in claim 1.

In a preferred embodiment, the retaining means comprises a surface of the slider defining a detent portion and a recess, and a retaining element between the housing and the slider such that the retaining element is in retaining engagement with the detent in the first position and is moveable within the recess in the second position.

Preferably, said retaining element comprises a ball.

Preferably, the pushing force of the pusher means moves the slider surface relative to the ball from the first position, in which the detent portion secures the ball between the slider and the housing such that the ball exerts a retaining force against the detent portion, into the recess where the ball exerts no retaining force and the slider is free to move.

Preferably, the slider surface has a guide slope between the detent portion and the recess to guide the ball from the first position to the second position.

Preferably, the retaining means comprises a plurality of balls distributed circumferentially between the slider and the housing.

The disclosure also provides a method of releasing an axially moveable lock bolt, comprising energizing a solenoid to cause a pusher means to move a slider relative to a housing in which the slider is mounted such as to release a retaining means retaining the slider in a first position relative to the housing.

### BRIEF DESCRIPTION OF THE DRAWINGS

Preferred embodiments will now be described by way of example only and with reference to the accompanying drawings in which:
Figure 1 shows a ram air turbine (RAT);
Figure 2A shows a schematic view of a typical linkage release mechanism in the locked position;
Figure 2B shows the mechanism of Fig. 2A in the unlocked position;
Figs. 3A and 3B show side view of the latch mechanism, which would replace the conventional mechanism shown within the dashed lines of Figs. 2A and 2B.
Figs. 4A to 4D show the stages of operation in unlatching the release mechanism.
Figs. 5A to 5C show the stages of operation in latching the release mechanism.

### DETAILED DESCRIPTION

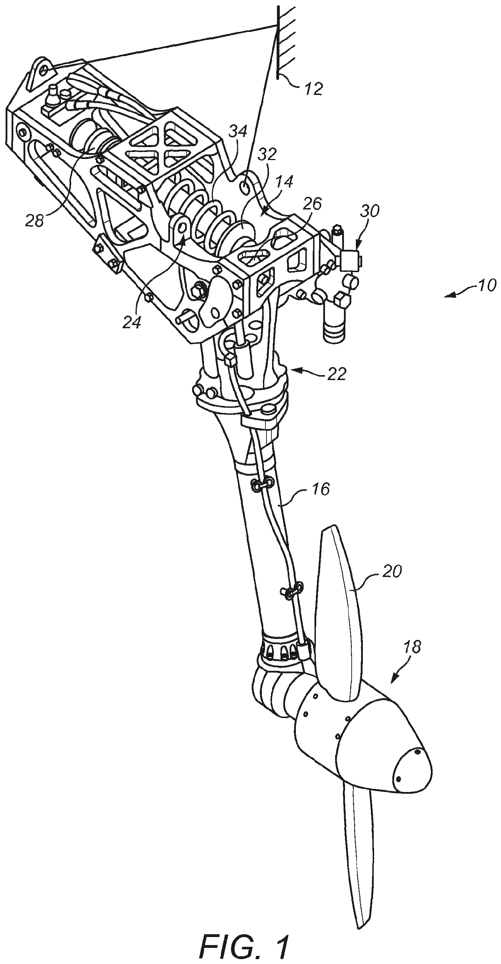

Figure 1 shows a RAT system 10 which is secured to an aircraft structure 12 by housing 14. The housing 14 pivotally supports a strut 16 having a turbine 18 at one end. The turbine 18 includes blades 20 which impart rotational drive to a generator 22 and a hydraulic pump 30, for example. An actuator 24 is secured to the strut at a first end 26 and to the housing at a second end 28. The actuator 24 is illustrated in its deployed position. The actuator 24 comprises a cylinder 32 which is biased by a spring 34 in order to deploy the strut 16. When the cylinder 32 is retracted, it is held in its retracted position by means of a lock bolt of a locking mechanism, details of which will be described below.

The unlocking of the actuator is initiated by permitting movement of the lock bolt 38. This is made possible by means of a release mechanism according to the present disclosure which will be described further below.

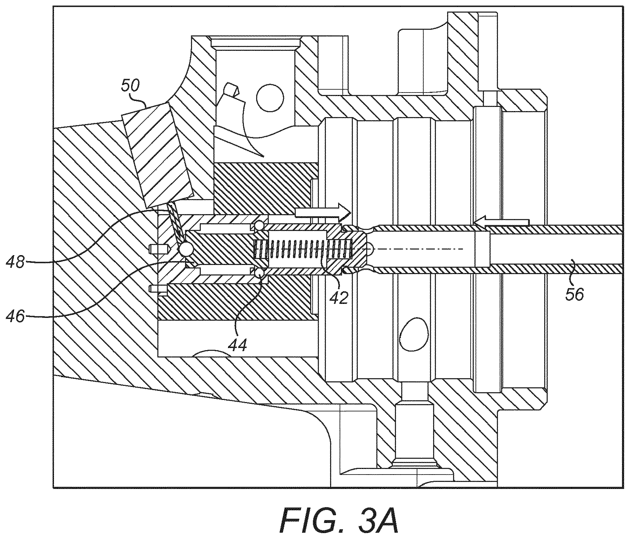

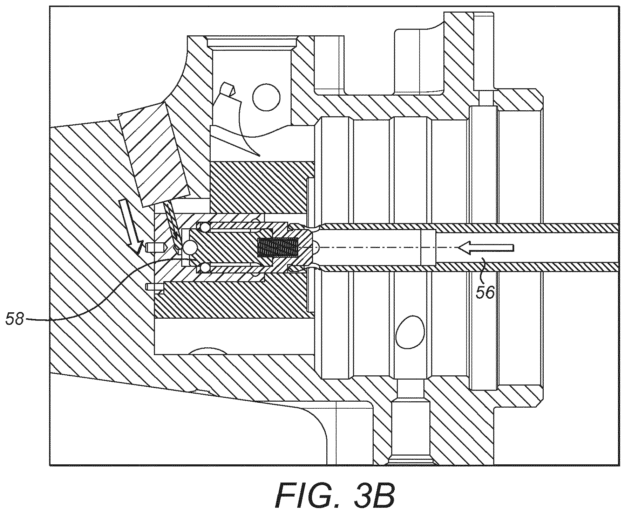

Figs. 3A and 3B show a schematic view of the latch mechanism which would replace the conventional, linkage-type or toggle mechanism shown within the dashed lines of Figs. 2A and 2B.

Fig. 3A shows the lock bolt in the locked position and, in Fig. 3B, in the unlocked position permitting movement of the lock bolt for deployment of the actuator.

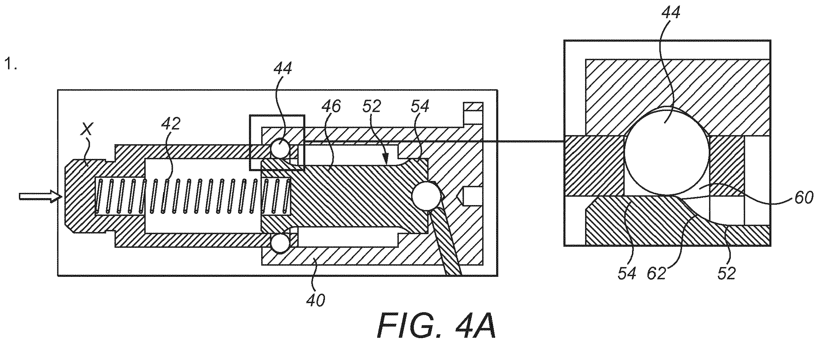

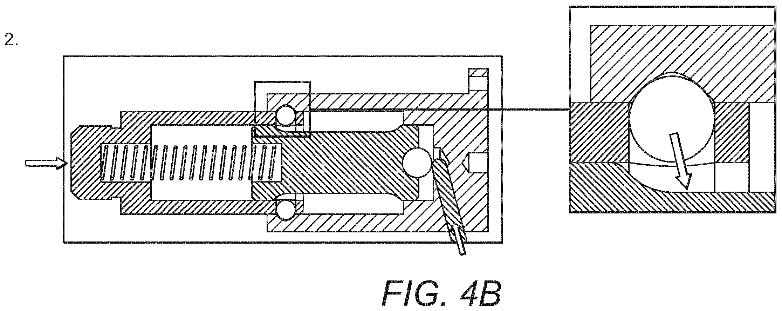

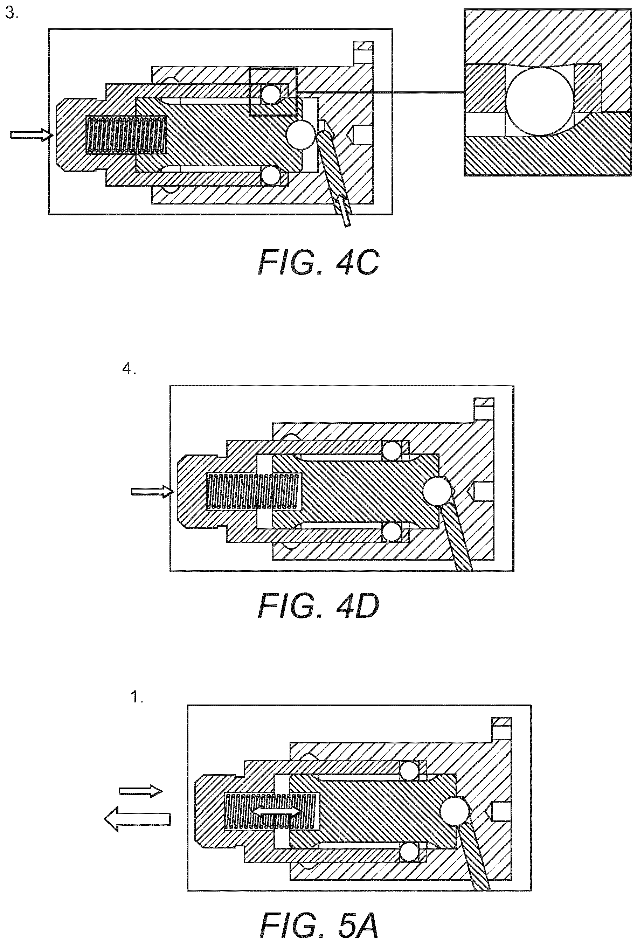

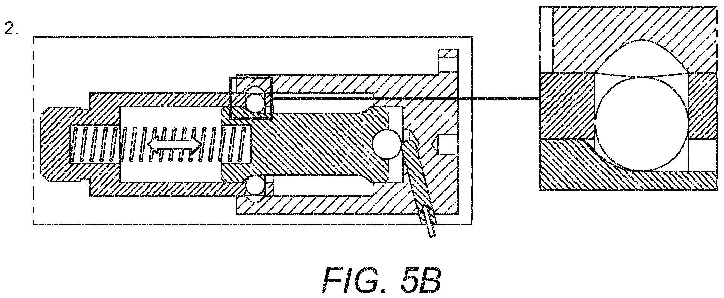

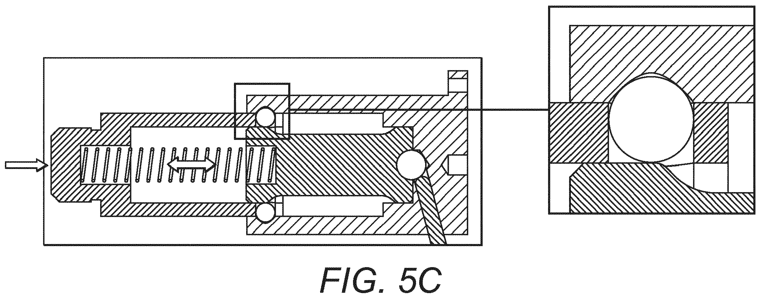

Figs. 4A to 4D and 5A to 5C show the components of Figs. 3A and 3B in, respectively, the latching and unlatching procedure.

The present disclosure replaces the toggle assembly of Figs. 2A and 2B with a latch mechanism comprising a cylindrical body or housing 40 within which is mounted a slider 46, to be slidably axially moveable relative to the cylindrical body, the slider 46 biased into a first position by means of a biasing means 42 such as a spring. A retaining means 44 such as one or more balls or ball bearings is provided to retain the slider in the first position relative to the cylindrical body. The retaining means is located between the slider 46 and the cylindrical body 40. The latch mechanism also includes a pusher 48 arranged to contact the slider and a solenoid 50 arranged to cause the pusher to move axially relative to the cylindrical body when the solenoid is energised.

In the first, latched position as shown in Fig. 3A, the solenoid 50 is de-energised and the pusher 48, therefore, does not exert any pushing force against the end of the slider 46. In this position the slider is held in a first position relative to the cylindrical body by means of the retaining means 44, e.g. balls which are secured in a recess 52 of the cylindrical housing and abut against a detent portion 54 of the slider. In this position, the latch spring or biasing means 42 is expanded such that the lock bolt 56, under the force of the lock bolt spring (not shown), is not able to move against the latch mechanism and the actuator cannot, therefore, be released. When it is desired to release the actuator, the lock bolt needs to be able to move (to the left in Fig. 3A/3B). The force of the latch mechanism preventing this movement, therefore, needs to be removed.

This is done by energising the solenoid 50 which causes the pusher 48 to exert a force against the end of the slider 46 and push the slider towards the lock bolt 56. This moves the detent portion 54 of the slider out of engagement with the ball 44 or other retaining mechanism. In the example shown, the recessed portion 52 of the slider moves towards the ball allowing the ball to move along the recess and out of its detained position. The retaining mechanism then no longer exerts a retaining force on the slider. The force of the spring (not shown) acting on the lock bolt 56 is then sufficient to overcome the force of the latch mechanism spring 42, which allows the lock bolt to move (in the left direction as shown in Fig. 3B).

A stop mechanism may also be provided whereby a further detent or stop 58 on the slider engages with the retaining mechanism after a given amount of axial movement of the slider as shown in Fig. 4C. When the retaining means is released from the detent and no longer exerts a retaining force on the slider, the solenoid can be de-energised, the lock bolt 56 is able to move and the actuator can be deployed.

As mentioned above, the retaining mechanism is preferably in the form of one or more ball bearings 44 provided in a channel or trace 60 around the inner circumference of the cylindrical body. The outer periphery of the slider is formed to have, at a first end, a detent 54 that engages with the ball(s) to prevent movement of the slider relative to the cylindrical body. Adjacent the detent, along the outer wall of the slider, is a recessed portion 52 whereby when the detent portion is moved out of engagement with the ball(s), the ball is free to slide within this recessed portion until it reaches a stop 58 at the other end of the slider.

In a preferred embodiment, the retaining mechanism comprises four ball bearings around the inner periphery of the cylindrical body.

For reasons of redundancy, it may be preferred to use two solenoids on either side of the latch mechanism. As an alternative, a single, double-mirrored electromagnetic solenoid can be used instead of two individual overlapping solenoids.

When the actuator is to be locked, for example if the RAT is to be retracted to the stowed position, pressure is applied during stowing of the actuator that moves the lock bolt away from the latch mechanism. The force of this stowing pressure is greater than the force of the lock bolt spring acting in the opposite direction (see Fig. 5A). The solenoid is then, again, energised. The latch spring expands, causing sliding movement of the latch until the detent portion of the latch engages, again, with the retaining mechanism such that the slider is prevented from further axial movement.

Once the detent feature is in place and the slider is prevented from any further axial movement, the force of the latch spring matches or exceeds the force of the lock bolt spring to prevent movement of the lock bolt and the solenoid can be de-energised once the slider is held in position by the detent. The actuator is then in a latched position awaiting further deployment.

The arrangement of the present release mechanism requires significantly fewer component parts as compared to the linkage or toggle assembly of the prior art, which, in turn, reduces the manufacturing, assembly and testing costs and avoids the need for shims as in the prior art systems. This can result in a more reliable and smaller deployment system, as smaller forces have to be overcome by the solenoid.

This mechanism could be easily adapted to existing actuators.

When the RAT is to be retracted to the stowed position, the lock bolt 56 is moved in the opposition direction. The solenoid plunger tip will cause the retaining balls to move into the recess or detent, locking the piston in position. This movement of the piston is realised by uncompressing (expanding) the supporting spring.

The above is a description of a single embodiment by way of example only. Modifications may be made without departing from the scope of this disclosure. While the apparatus has been described in the context of unlocking a RAT actuator, it may, as mentioned above, find use in other applications, for example of the types of actuator, valves, pumps or the like.

## Claims

1. A ram air turbine actuator assembly comprising an axially moveable lock bolt (56) and a locking mechanism for releasably locking the lock bolt against axial movement, the mechanism comprising:
a locking cylinder comprising
a housing (40) within which is slidably mounted a slider (46) which, in a first position, prevents movement of the lock bolt (56) and in a second position permits movement of the lock bolt (56);
retaining means (44) for retaining the slider (46) with respect to the housing, in the first position;
pusher means (48) arranged to contact the slider (46); and solenoid means (50) arranged, on activation, to cause the pusher means (48) to exert a pushing force against an end of the slider (46) and push the slider (46) towards the lock bolt (56) such as to release the retaining means (44) such as to permit axial movement of the slider (46) to the second position.

2. The assembly of claim 1, wherein the retaining means comprises a surface of the slider defining a detent portion (54) and a recess (52), and a retaining element (44) between the housing and the slider such that the retaining element is in retaining engagement with the detent in the first position and is moveable within the recess in the second position.

3. The assembly of claim 2, wherein said retaining element comprises a ball (44).

4. The assembly of claim 3, wherein the pushing force of the pusher means (48) moves the slider surface relative to the ball (44) from the first position, in which the detent portion (54) secures the ball (44) between the slider (46) and the housing (40) such that the ball exerts a retaining force against the detent portion, into the recess (52) where the ball exerts no retaining force and the slider is free to move.

5. The assembly of claim 4, wherein the slider surface has a guide slope (62) between the detent portion (54) and the recess (52) to guide the ball (44) from the first position to the second position.

6. The assembly of any preceding claim, wherein the retaining means comprises a plurality of balls (44) distributed circumferentially between the slider (46) and the housing (40).

## Patentansprüche

1. Stauluftturbinenbetätigungsbaugruppe, umfassend einen axial bewegbaren Verriegelungsbolzen (56) und einen Verriegelungsmechanismus zum lösbaren Verriegeln des Verriegelungsbolzens gegen eine axiale Bewegung, wobei der Mechanismus Folgendes umfasst:
einen Verriegelungszylinder, umfassend
ein Gehäuse (40), innerhalb dessen ein Schieber (46) gleitbar montiert ist, der in einer ersten Position eine Bewegung des Verriegelungsbolzens (56) verhindert und in einer zweiten Position eine Bewegung des Verriegelungsbolzens (56) zulässt;
ein Rückhaltemittel (44) zum Rückhalten des Schiebers (46) in der ersten Position in Bezug auf das Gehäuse;
ein Schiebemittel (48), das angeordnet ist, um mit dem Schieber (46) in Kontakt zu stehen; und
ein Solenoidmittel (50), das angeordnet ist, um bei Aktivierung das Schiebemittel (48) zu veranlassen, eine Schubkraft gegen ein Ende des Schiebers (46) auszuüben und den Schieber (46) in Richtung des Verriegelungsbolzens (56) zu schieben, um so das Rückhaltemittel (44) zu lösen, um so eine axiale Bewegung des Schiebers (46) in die zweite Position zuzulassen.

2. Baugruppe nach Anspruch 1, wobei das Rückhaltemittel eine Fläche des Schiebers, die einen Rastabschnitt (54) und eine Aussparung (52) definiert, sowie ein Rückhalteelement (44) zwischen dem Gehäuse und dem Schieber umfasst, sodass das Rückhalteelement in der ersten Position in Rückhalteeingriff mit der Raste steht und in der zweiten Position innerhalb der Aussparung bewegbar ist.

3. Baugruppe nach Anspruch 2, wobei das Rückhalteelement eine Kugel (44) umfasst.

4. Baugruppe nach Anspruch 3, wobei die Schubkraft des Schiebemittels (48) die Schieberfläche relativ zu der Kugel (44) aus der ersten Position, in welcher der Rastabschnitt (54) die Kugel (44) zwischen dem Schieber (46) und dem Gehäuse (40) sichert, sodass die Kugel eine Rückhaltekraft gegen den Rastabschnitt ausübt, in die Aussparung (52) schiebt, wobei die Kugel keine Rückhaltekraft ausübt und der Schieber frei beweglich ist.

5. Baugruppe nach Anspruch 4, wobei die Schieberfläche eine Führungsschräge (62) zwischen dem Rastabschnitt (54) und der Aussparung (52) aufweist, um die Kugel (44) aus der ersten Position in die zweite Position zu führen.

6. Baugruppe nach einem der vorhergehenden Ansprüche, wobei das Rückhaltemittel eine Vielzahl von Kugeln (44) umfasst, die in Umfangsrichtung zwischen dem Schieber (46) und dem Gehäuse (40) verteilt sind.

## Revendications

1. Ensemble actionneur de turbine à air dynamique comprenant un boulon de verrouillage axialement mobile (56) et un mécanisme de verrouillage pour le verrouillage libérable du boulon de verrouillage contre le mouvement axial, le mécanisme comprenant :
un cylindre de verrouillage comprenant
un boîtier (40) à l'intérieur duquel est monté de manière coulissante un coulisseau (46) qui, dans une première position, empêche le mouvement du boulon de verrouillage (56) et dans une deuxième position permet le mouvement du boulon de verrouillage (56) ;
un moyen de retenue (44) pour retenir le coulisseau (46) par rapport au boîtier, dans la première position ;
un moyen poussoir (48) agencé pour entrer en contact avec le coulisseau (46) ; et
un moyen solénoïde (50) agencé, sur activation, pour amener le moyen poussoir (48) à exercer une force de poussée contre une extrémité du coulisseau (46) et à pousser le coulisseau (46) vers le boulon de verrouillage (56) de sorte à libérer le moyen de retenue (44) de sorte à permettre le mouvement axial du coulisseau (46) vers la deuxième position.

2. Ensemble selon la revendication 1, dans lequel le moyen de retenue comprend une surface du coulisseau définissant une portion de détente (54) et un évidement (52), et un élément de retenue (44) entre le boîtier et le coulisseau de sorte que l'élément de retenue est en prise de retenue avec la détente dans la première position et est mobile à l'intérieur de l'évidement dans la deuxième position.

3. Ensemble selon la revendication 2, dans lequel ledit élément de retenue comprend une bille (44).

4. Ensemble selon la revendication 3, dans lequel la force de poussée du moyen poussoir (48) déplace la surface de coulisseau par rapport à la bille (44) de la première position, dans laquelle la portion de détente (54) fixe la bille (44) entre le coulisseau (46) et le boîtier (40) de sorte que la bille exerce une force de retenue contre la portion de détente, dans l'évidement (52) où la bille n'exerce aucune force de retenue et le coulisseau est libre de se déplacer.

5. Ensemble selon la revendication 4, dans lequel la surface de coulisseau a une pente de guidage (62) entre la portion de détente (54) et l'évidement (52) pour guider la bille (44) de la première position à la deuxième position.

6. Ensemble selon une quelconque revendication précédente, dans lequel le moyen de retenue comprend une pluralité de billes (44) distribuées circonférentiellement entre le coulisseau (46) et le boîtier (40).
